# EUROPEAN PATENT SPECIFICATION

(11) **EP 1 357 661 B1**
(45) Date of publication and mention of the grant of the patent: **26.03.2008**
(21) Application number: 03252619.6
(22) Date of filing: 25.04.2003
(51) Int. Cl.: H02M 1/10

(54) **Circuit design for variable application of an input voltage to a circuit**
Schaltungsanordnung zur veränderbaren Anlegung einer Eingangsspannung zu einer Schaltung
Architecture de circuit pour l'application variable d'une tension d'entrée à un circuit

(30) Priority: 26.04.2002 DE 10219645
(43) Date of publication of application: 29.10.2003
(73) Proprietor: Bombardier Transportation GmbH, 13627 Berlin (DE)
(72) Inventor: Rudolf, Michael, 10711 Berlin (DE)
(74) Representative: Broydé, Marc

(56) References cited:
- EP-A- 0 881 758
- WO-A-00/30241
- WO-A-01/69769
- CH-A- 83 200
- DE-A- 1 413 609
- DE-A- 1 945 678
- DE-A- 2 504 120
- DE-A- 3 615 851
- DE-A- 3 935 414
- DE-B- 1 116 917
- FR-A- 1 407 491
- FR-A- 2 688 635
- GB-A- 330 603
- GB-A- 1 108 005
- US-A- 3 012 206
- US-A- 3 231 767
- US-A- 3 846 695
- US-A- 3 983 428
- US-A- 4 178 578
- US-A- 4 408 154
- US-A- 5 017 818
- US-A- 6 048 219
- US-B1- 6 269 015
- PATENT ABSTRACTS OF JAPAN vol. 017, no. 449 (M-1465), 18 August 1993 (1993-08-18) & JP 05 104247 A (SANSHA ELECTRIC MFG.), 27 April 1993 (1993-04-27)
- PATENT ABSTRACTS OF JAPAN vol. 009, no. 015 (E-291), 22 January 1985 (1985-01-22) & JP 59 162774 A (FUJITSU LTD.), 13 September 1984 (1984-09-13)
- PATENT ABSTRACTS OF JAPAN vol. 016, no. 300 (E-1227), 2 July 1992 (1992-07-02) & JP 04 079768 A (FUJI ELECTRIC), 13 March 1992 (1992-03-13)

## Description

The present invention relates to a circuit design by means of which an input voltage can be applied in a variable manner to a circuit which comprises two or more circuit components. The circuit is, in particular, a circuit in trains, by means of which different train busbar voltages can be converted to an intermediate-circuit voltage.

At present, it is frequently necessary for a circuit to have to be matched to different voltages in order to allow such circuits to be used internationally. This also applies in particular to the field of trains and, in particular, to railway carriages. In order to allow them to be used internationally, the trains and the railway carriages must be capable of being operated with, for example, the train busbar voltages that occur most frequently nowadays of 1000 V, 16.7 Hz / 22 Hz /50 Hz AC, 1500 V, 50 Hz AC, 3000 V, 50 Hz AC, 1500 V DC and 3000 V DC.

The train busbar voltage is in this case converted by voltage conversion circuits to a so-called intermediate-circuit voltage, for example to a DC voltage of 670 Volts, which, possibly after further conversion, is then used to supply various devices in the train power supply system.

More recently, the progress in power electronics, which has allowed the production of components with higher blocking voltages, has made it possible to use so-called high-voltage converters as voltage conversion elements, which can be operated directly from the train busbar voltage. In this case, the normal train busbar voltages as stated above can be covered by two high-voltage converters which are designed for maximum train busbar voltages that occur and are connected to the train busbar voltage in series or in parallel.

The problem is that, if it is necessary to rewire the cables which carry the input voltage, in this case by way of example the train busbar voltage, to the circuit components, for example to the high-voltage converters, in this case for the different connections of circuit components, when the input voltage has to be connected to the circuit components in a different way because the input voltage is different, this represents a highly labour-intensive, tedious and thus expensive procedure.

Prior art document WO 01/69769 discloses a circuit design for variable application of an input voltage to a circuit which comprises at least two circuit components which each have two input connections. The circuit design has two terminals for the input voltage and in each case two terminals for the input connections of the at least two circuit components. Two terminals with bridging elements are in each case connected to one another in a desired manner for variable application of the input voltage.

The object of the present invention is therefore to specify a circuit design by means of which an input voltage can be applied in an easily variable manner to a circuit which comprises different circuit components. The circuit design should in this case be suitable in particular for use in trains for the conversion of a variable train busbar voltage to a constant intermediate-circuit voltage using voltage conversion elements, such as high-voltage converters.

The object is achieved by a structure which has the features of the main claim. The dependent claims specify preferred developments of this circuit design.

The circuit design according to the invention has two or more terminals. The input voltage is in this case connected to two of these terminals. Two further terminals are in this case also connected to the input of a circuit component which the input voltage is intended to supply. In order now to allow the circuit components to be connected to the input voltage in different ways, in particular in a series circuit or in a parallel circuit, two terminals are in each case connected by means of bridging elements in an appropriate manner. The bridging elements may, for example, be wire links, which can be plugged onto the terminals, or screwed to them, in various ways, or solid lugs which can be connected to the terminals in various ways, or else switchable elements, in particular contactors.

It is advantageous for the terminals to be at the same distance from one another since bridging elements that are the same as one another, that is to say bridging elements with the same external dimensions for the connections, can then be used for bridging or connection of the terminals.

The circuit design according to the invention can be used in a general form for variable application of an input voltage to different circuit components, and it is particularly suitable for use for the conversion of a variable train busbar voltage to a constant intermediate-circuit voltage, using voltage conversion elements such as high-voltage converters.

The circuit design according to the invention will be described in more detail in the following text with reference to an embodiment for conversion of a variable train busbar voltage to a constant intermediate-circuit voltage using voltage conversion elements as shown in the figures in the drawing.
Figure 1 shows, schematically, a parallel circuit formed by two voltage conversion elements in a conversion circuit for conversion of a train busbar voltage to an intermediate circuit voltage;
Figure 2 shows, schematically, a series circuit formed by two voltage conversion elements in a conversion circuit for the conversion of a train busbar voltage to an intermediate-circuit voltage;
Figure 3 shows, schematically, a circuit arrangement in which two voltage conversion elements can be arranged both connected in parallel and connected in series, with the aid of switches, in a conversion circuit for the conversion of a train busbar voltage to an intermediate-circuit voltage;
Figure 4 shows an arrangement of the terminals and their alternate connection in the form of a triangle.

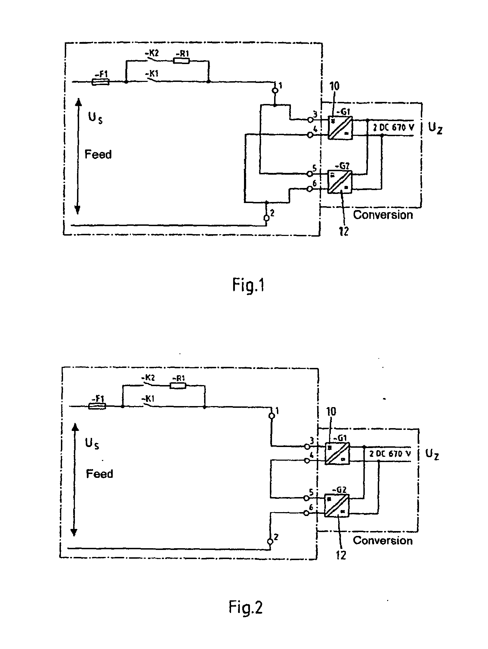

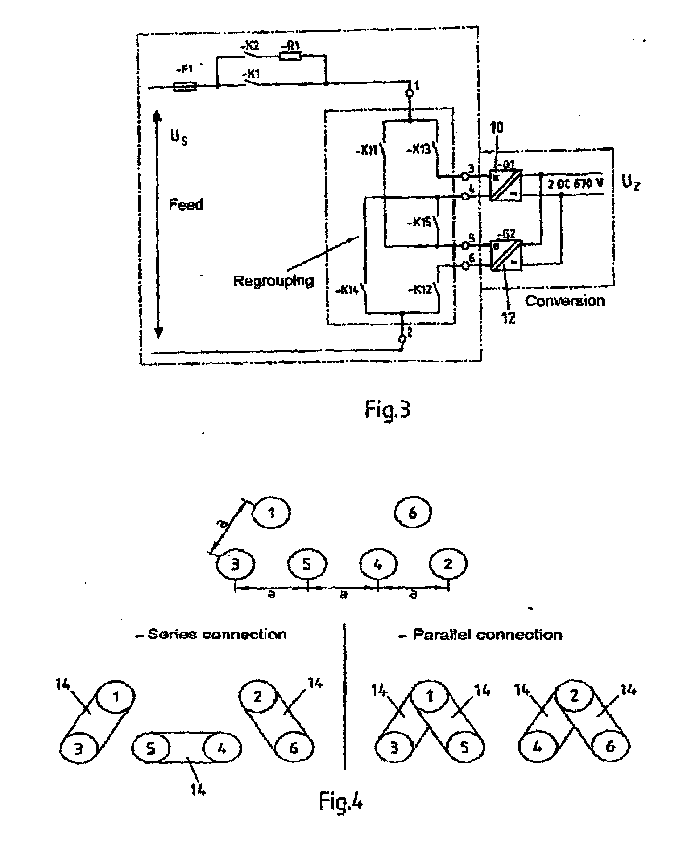

Figure 1 shows, schematically, a conversion circuit for the conversion of a train busbar voltage Uₛ to an intermediate-circuit voltage U_{z}. Two voltage conversion elements, for example high-voltage converters 10 and 12, are in this case provided for the conversion process. Furthermore, the circuit has six terminals 1, 2, 3, 4, 5 and 6, which are annotated by hollow circles. The terminals 1 and 2 are in this case connected to the train busbar voltage via input elements such as fuses or resistors, which may be required here but are not of any further interest for the invention. The terminals 3 and 4 are connected to the input of the first voltage conversion element 10, and the terminals 5 and 6 are connected to the input of the second voltage conversion element 12. The outputs of the voltage conversion elements 10 and 12 are connected in parallel by means of two output lines to the terminals at which the intermediate-circuit voltage U_{z} which can be tapped off is produced. Figure 1 shows the voltage conversion elements connected in parallel. The circuit shown in Figure 2 corresponds to the circuit shown in Figure 1, but in this case with the two voltage conversion elements 10 and 12 being arranged in the form of a series circuit. The circuit shown in Figure 3 represents a combination of the circuits shown in Figure 1 and Figure 2. In this circuit, the two voltage conversion elements 10 and 12 can be arranged either in the form of a parallel circuit or in the form of a series circuit. Five switches K11, K12, K13, K14 and K15 are provided for this purpose and may, by way of example, be contactors. When the switches K11, K12, K13 and K14 are closed, then the voltage conversion elements 10 and 12 are connected in parallel, and when the switches K12, K13 and K15 are closed, then the voltage conversion elements are connected in series.

Figure 4 shows an arrangement of the terminals 1, 2, 3, 4, 5 and 6 in the form of a triangle (which is open at the top). As can easily be seen, the terminals are all at the same distance apart from one another here. In the same way as the terminals 2, 4 and 6, the terminals 1, 3 and 5 are in this case arranged in the form of an equilateral triangle. The terminals in the uppermost triangle are all shown without any connection. This is intended to represent the situation in which switches are provided between the terminals, as is shown in Figure 3, so that the terminals can be connected to one another in different ways by closing the switches. In the left lower triangle, the terminals 3 and 1, the terminals 5 and 4 and of the terminals 2 and 6 are each connected by means of a bridging element 14. Connecting the terminals in this way results in the voltage conversion elements 10 and 12 being connected in series, as is shown in Figure 2. In the right lower triangle, the terminals 3 and 1, 1 and 5 and the terminals 4 and 2, 2 and 6 are each connected by means of a bridging element 14. Connecting the terminals in this way results in the voltage conversion elements 10 and 12 being connected in parallel, as is shown in Figure 1.

### List of reference symbols

- a: Distance between terminals
- 1, 2, 3, 4, 5, 6: Terminals
- 10: First voltage conversion element (circuit component)
- 12: Second voltage conversion element (circuit component)
- 14: Bridging element
- K11, K12, K13, K14, K15: Switches
- Uₛ: Busbar voltage (input voltage)
- U_{z}: Intermediate-circuit voltage (output voltage)

## Claims

1. Circuit design for variable application of an input voltage (Uₛ) to a circuit which comprises at least two Circuit components (10, 12) which each have two input connections, the circuit design comprising:
- two terminals (1, 2) for the input voltage (Uₛ) and in each case
- two terminals (3, 4 and 5, 6) for the input connections of the at least two circuit components (10, 12), and
- bridging elements (14) each for connecting two of the terminals to one another in a desired manner for variable application of the input voltage (Uₛ), wherein the bridging of in each case two terminals by means of a bridging element (14) on the one hand provides a connection between the at least two circuit components (10, 12) and the input voltage (Uₛ) in the form of a series circuit, and on the other hand alternatively provides a connection between the two circuit components (10, 12) and the input voltage (Uₛ) in the form of a parallel circuit,
**characterized in that** the terminals are arranged to form two equally sized, equilateral triangles with two terminals, one forming part of each of the two triangles, being arranged at a distance that is the same as the distance between two terminals in each of the triangles.

2. Circuit design according to claim 1, **characterized in that** the bridging elements (14) are wire links which can be pushed or screwed in.

3. Circuit design according to one of the preceding claims, **characterized in that** the bridging elements are solid lugs (14) which can be pushed or screwed in.

4. Circuit design according to Claim 1, **characterized in that** the bridging elements (14) are switchable elements (K11, K12, K13, K14, K15), in particular contactors.

5. Circuit design according to one of the preceding claims, **characterized in that** the circuit components are voltage conversion elements (10, 12).

6. Circuit design according to Claim 5, **characterized in that** the voltage conversion elements (10, 12) are high-voltage converters.

7. Circuit design according to Claim 6, **characterized in that** the circuit is a circuit in trains, for the conversion of different train busbar voltages (Uₛ) to an intermediate-circuit voltage (U_{z}) which, possibly after further conversion, is used for supplying various devices in a train power supply system.

## Patentansprüche

1. Schaltungsaufbau für variable Anwendung einer Eingangsspannung (Uₛ) auf eine Schaltung, die zumindest zwei Schaltungsbauteile (10, 12) umfasst, die jeweils zwei Eingangsverbindungen aufweisen, der Schaltungsaufbau umfassend:
- zwei Anschlüsse (1, 2) für die Eingangsspannung (Uₛ) und jeweils
- zwei Anschlüsse (3, 4 und 5, 6) für die Eingangsverbindungen der zumindest zwei Schaltungsbauteile (10, 12), und
- Brückenelemente (14), jeweils zum miteinander Verbinden von zwei der Anschlüsse in einer gewünschten Weise für' eine variable Anwendung der Eingangsspannung (Uₛ), wobei die Überbrückung von jeweils zwei Anschlüssen durch ein Brückenelement (14) auf der einen Seite eine Verbindung zwischen den zumindest zwei Schaltungsbauteilen (10, 12) und der Eingansspannung (Uₛ) in Form einer Reihenschaltung bildet und auf der anderen Seite alternativ eine Verbindung zwischen den Schaltungsbauteilen (10, 12) und der Eingangspannung (Uₛ) in Form einer Parallelschaltung bildet,
**dadurch gekennzeichnet, dass**
die Anschlüsse angeordnet sind zur Bildung gleichgroßer, gleichseitiger Dreiecke mit zwei Anschlüssen, wobei ein Anschluss einen Teil von jedem der zwei Dreiecke bildet, die in einem Abstand der gleich dem Abstand zwischen zwei Anschlüssen in jedem der Dreiecke angeordnet sind.

2. Schaltungsaufbau nach Anspruch 1, **dadurch gekennzeichnet, dass** die Brückenelemente (14) Leitungsverbindungen sind, die eingesteckt oder eingeschraubt werden können.

3. Schaltungsaufbau nach einem der vorherigen Ansprüche, **dadurch gekennzeichnet, dass** die Brückenelemente (14) feste Lüsterklemmen sind, die eingesteckt oder eingeschraubt werden können.

4. Schaltungsaufbau nach Anspruch 1, **dadurch gekennzeichnet, dass** die Brückenelemente (14) schaltbare Elemente (K11, K12, K13, K14, K15) sind, insbesondere Schaltschütze sind.

5. Schaltungsaufbau nach einem der vorherigen Ansprüche, **dadurch gekennzeichnet, dass** die Schaltungsbauteile Spannungswandlerelemente (10, 12) sind.

6. Schaltungsaufbau nach Anspruch 5, **dadurch gekennzeichnet, dass** die Spannungswandlerelemente (10, 12) Hochspannungswandler sind.

7. Schaltungsaufbau nach Anspruch 6, **dadurch gekennzeichnet, dass** die Schaltung eine Schaltung in Schienenfahrzeugen ist zur Wandlung von verschiedenen Schienenfahrzeugssammelschienenspannungen (Uₛ) zu einer Zwischenschaltungsspannung (U_{z}), die, möglicherweise nach einer weiteren Wandlung, zur Versorgung verschiedener Einrichtung in einem Schienenfahrzeugsenergieversorgungssystem verwendet wird.

## Revendications

1. Configuration de circuit pour une application variable d'une tension d'entrée (Uₛ) à un circuit qui comprend au moins deux composants de circuit (10, 12) qui ont chacun deux connexions d'entrée, la configuration de circuit comprenant :
- deux bornes (1, 2) pour la tension d'entrée (Uₛ) et dans chacun des cas :
- deux bornes (3, 4 et 5, 6) pour les connexions d'entrée des au moins deux composants de circuit (10, 12), et
- des éléments de pontage (14) chacun permettant de connecter entre elles deux des bornes d'une manière souhaitée pour une application variable de la tension d'entrée (Uₛ), le pontage de deux bornes, dans chacun des cas, au moyen d'un élément dé pontage (14), fournissant une part une connexion entre les au moins deux composants de circuit (10, 12) et la tension d'entrée (Uₛ) sous la forme d'un circuit série, et d'autre part, selon une autre solution, une connexion entre les deux composants de circuit (10, 12) et la tension d'entrée (Uₛ) sous la forme d'un circuit parallèle,
**caractérisée en ce que** les bornes sont agencées de manière à former deux triangles équilatéraux de taille égale avec deux bornes, l'une faisant partie de chacun des deux triangles, agencés à une distance égale à la distance qui sépare deux bornes dans chacun des triangles.

2. Configuration de circuit selon la revendication 1, **caractérisée en ce que** les éléments de pontage (14) sont des liaisons câblées qui peuvent être poussées ou vissées à l'intérieur.

3. Configuration de circuit selon l'une quelconque des revendications précédentes, **caractérisée en ce que** les éléments de pontage (14) sont des cosses solides qui peuvent être poussées ou vissées à l'intérieur.

4. Configuration de circuit selon la revendication 1, **caractérisée en ce que** les éléments de pontage (14) sont des éléments commutables (K11, K12, K13, K14, K15) en particulier des contacteurs.

5. Configuration de circuit selon l'une quelconque des revendications précédentes, **caractérisée en ce que** les composants de circuit sont des éléments de conversion de tension (10, 12).

6. Configuration de circuit selon la revendication 5, **caractérisée en ce que** les éléments de conversion de tension (10, 12) sont des convertisseurs haute tension.

7. Configuration de circuit selon la revendication 6, **caractérisée en ce que** le circuit est un circuit destiné à des trains, permettant la conversion de différentes tensions de barres omnibus de train (Uₛ) en une tension de circuit intermédiaire (U_{z}) qui, éventuellement après une autre conversion, est utilisée pour alimenter plusieurs dispositifs dans un système d'alimentation électrique de train.
